# EUROPEAN PATENT APPLICATION

(11) **EP 0 992 567 A2**
(43) Date of publication of application: **12.04.2000**
(21) Application number: 99500163.3
(22) Date of filing: 16.09.1999
(51) Int. Cl.: C10B 7/10, C10B 53/00

(54) **Solid waste treatment plant**

(30) Priority: 23.09.1998 ES 9801994
(71) Applicant: Friu, S.A., 07009 Palma de Mallorca (ES)
(72) Inventor: Lago Lucio, Jose Manuel, 07009 Palma de Mallaorca (ES)
(74) Representative: Marques Alos, Fernando

(57) **Abstract**

**"SOLID WASTE TREATMENT PLANT"**, equipped with an external stoking hopper (1), a spiral conveyor (2), and an upper stoking hopper (3) as well as a closed lower hopper (4) connected to a secondary vacuum pump (23) which feeds the continuous tubular catalytic cracking reactor with spiral conveyors (25) at variable speeds, equipped with lids-resistances (12) to obtain ash and catalytic cracking gas, the ashes being moved by the spiral conveyor towards a hopper (5) connected to a storage hopper (6) equipped with a depression gas outlet which leads into a secondary vacuum pump pipe (23) while the gas is carried to heat exchangers which cool and condense the gas, taking only the fraction of gas which cannot be condensed to a gas neutraliser (18), primary vacuum pump (19) and gas filter (20).

## Description

The object of the invention, as expressed in the summary of this descriptive report, consists of a "**SOLID WASTE TREATMENT PLANT**" using a pyrolytic process.

At present, the volume of solid waste is increasing considerably, primarily due to the standard of living in modern society.

The treatment of this type of waste is therefore becoming an increasingly important option if the desire is to reduce the volume of such waste in a controlled manner.

Traditionally, waste control systems have been based on dumping into controlled spaces. Such systems require vast spaces with well-defined geographical characteristics and suffer the inconveniences of space limitations.

One of the methods that is becoming increasingly popular focuses on the energetic recovery of the decomposed waste in ways which are viable for industry.

One such method consists of waste incineration. This method is very effective as it reduces the entire volume of the waste to ash. On the other hand, it has a contaminating effect due to the combustion gases generated.

Another method consists of pelleting whereby combustible pellets are formed for industrial use.

Finally, a third method consists of catalytic cracking in which the organic matter is treated in a coking process to obtain solid fuel with good thermal results and low ash contents which is easily accepted by industries for injection into suitable burners.

The gas obtained from catalytic cracking is generally neutralised for the production of energy required by industrial processes.

Finally, one of the by-products of the catalytic cracking is a low temperature tar that is rich in aromatic solvents which can be used by the covering industry and for solvent recovery.

This invention improves the energetic performance as well as the speed of treatment and control of the reaction products, based on a controlled pyrolytic process under depression conditions at low temperatures.

The catalytic cracking reactor works continuously with direct heating.

The catalytic cracking process developed may be applied to any type of waste meeting the following conditions: P.C.I. higher than 1,800 Kcal/Kg and capable of being reduced to grades lower than 100 mm.

Thanks to the process design for working under vacuum conditions and in a closed circuit, the same process can be used to treat toxic or hazardous products, provided that they meet the preceding conditions.

The process is particularly recommended for the following materials, among others:
- Combustible fraction of rejected solid urban vaste and urban assimilables.
- Rubber, tires, leather, textiles, etc.
- Complex plastic mixtures, including mixtures with other materials such as Tetra Briks, aluminium laminates with plastic, electrical wires, etc.
- Wood and forestal biomass.
- Oils and liquid emulsions.
- Infectious, toxic and hazardous waste.

In order to optimise the performance of the pyrolytic treatment known as controlled catalytic cracking of the solid waste, a technique based on a continuous vacuum process with direct heating has been developed.

The continuous vacuum process allows for uninterrupted stoking, thereby diminishing the dimensions of the equipment needed and eliminating energy losses, compared to discontinuous processes.

The vacuum process guarantees certain reaction speeds of the catalytic cracking or superior cracking, making it possible to reduce the process temperature and therefore lower process costs.

Direct heating ensures the improved energetic performance of the equipment and optimises the plant's treatment capacity.

The solid waste treatment plant using catalytic cracking is broken down into four basic parts:

An exclusive stoking system whereby the waste is fed into the catalytic cracking reactor continuously, maintaining vacuum conditions throughout the entire system.

A continuous, tubular catalytic cracking reactor with direct heating designed to work under depression conditions.

A gas treatment system based on a heat exchanger and condensation lines, high efficiency filters for iron oxide, lime oxide and active carbon for complete purification of the catalytic cracking gases.

A measuring and characterising plant composed of equipment which measures the gases produced in terms of both the flow volume and the physiochemical characteristics and composition. The purpose of this equipment is to determine the future production of gases be used as fuel for electrical production using gas engines and electrical generators.

The result of this process is a catalytic cracking gas which is basically useful for gas engine co-generation.

The by-products obtained include a liquid fuel with a P.C.I. of 9,800 kcal/kg. and a solid fuel with a P.C.I. of 6,000 kcal/kg, both of which can be used as alternative fuels for energy production.

### DESCRIPTION OF THE DRAWINGS

In order to illustrate what has been described above, this descriptive report is accompanied by a page of drawings which is an integral part of the report and which contains a simplified and schematic depiction of an illustrative albeit in no way limitative example of the invention's practical possibilities.

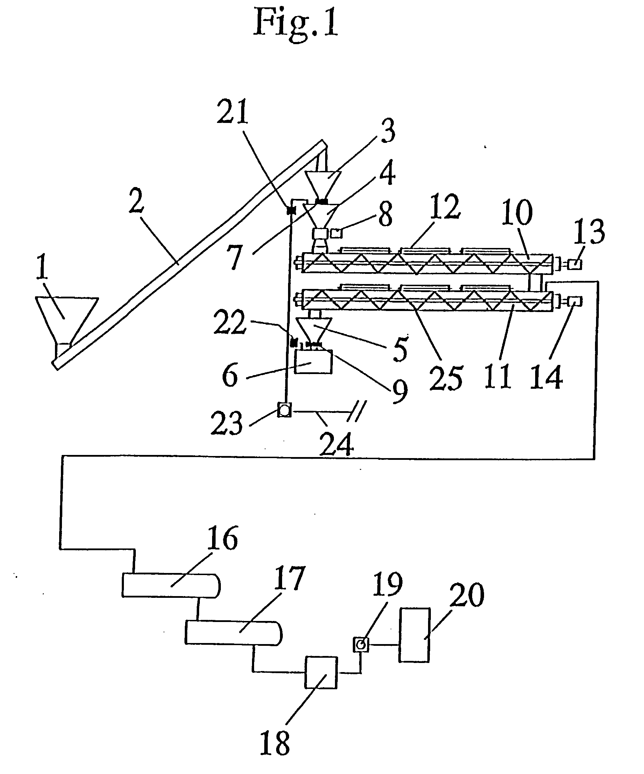

In said drawings, Figure 1 shows a schematic view of the solid waste treatment plant.

### DESCRIPTION OF A PRACTICAL CASE

The innovative solid waste treatment plant by catalytic cracking consists of an external stoking hopper (1) for continuous feeding of solid waste while maintaining a vacuum throughout the entire system.

The waste flows into a spiral conveyor (2) which carries it into a closed upper stoking hopper (3) that serves as a storage area to guarantee stoking to the lower hopper at all times.

The waste is moved from the hopper (3) to the lower stoking hopper (4) by means of an electric valve which controls the flow of material (7). When the electric valve closes (7) another electric valve (21) opens to generate the vacuum conditions required to proceed with the stoking of the catalytic cracking reactor.

The waste moves from the upper hopper (3) to the lower hopper (4) by means of an electric valve which controls the flow of material (7).

Said lower hopper has an alveolar control valve on the bottom which is connected to the catalytic cracking reactor equipped with two interconnected reaction tubes, the uppers reactor tube (7) and the lower tube (8) both with spiral conveyors (25) and variable speed motors (13) and (14).

The catalytic cracking reactor is continuous and tubular with direct heating thanks to the lid-resistances (12) located on the top and designed for depression conditions.

Once the pyrolytic process is complete, a solid ash product is obtained along with the catalytic cracking gas.

The ash is drawn by the lower spiral conveyor to the upper ash hopper (5) connected to an ash storage hopper (6) which has a depression gas outlet controlled by an electric valve to control the flow of gases (22) which comes out to a secondary vacuum circuit outlet (24) through the vacuum pump pipe (23).

The lower pipe (11) of the reactor has a primary vacuum outlet (15) for evacuating the catalytic cracking gas, which comes out to two serially-connected heat interchangers, a primary one (16) and a secondary one (17) that cool and condense the gases or vapours, allowing only the non-condensable fraction of the gas to escape which is neutralised by means of a gas neutralising filter (18) connected to the primary vacuum pump (19) and finally sent through a gas filter (20) to filter out the iron, lime and carbon oxide which may be recovered for consumption by the plant itself.

Having established the concept of the invention, the innovations being claimed are synthesised in the list of claims shown below.

### NOTE

In summary, the privilege of exclusive operation being sought is based on the following claims:

## Claims

1. "**SOLID WASTE TREATMENT PLANT**" using a pyrolytic process wherein the vacuum conditions are maintained throughout the entire system, essentially characterised by the fact that it is composed of an external, continuous solid waste stoking hopper (1), the waste coming out to a spiral conveyor (2) which carries it to a closed upper stoking hopper (3) while the waste passes through an electric valve which controls the flow of material (7) from the upper hopper (3) to the lower hopper (4), the latter being equipped with an electric valve (21) to control the gas connected to a secondary vacuum pump (23) as well as an alveolar control valve (8) which is connected to a continuous tubular catalytic cracking reactor composed of two interconnected reaction pipes, an upper pipe (10) and a lower one (11) both with spiral conveyors (25) and variable speed motors (13) and (14), said reactor being a complete head type with direct heating equipped with lids-resistances (12) positioned on the top.

2. "**SOLID WASTE TREATMENT PLANT**", as per the preceding claim, characterised by the fact that the pyrolytic process in the reactor produces a solid ash product and catalytic cracking gas, the ashes being carried by the lower spiral conveyor to an upper ash hopper (5) connected to an ash storage hopper (6) which is equipped with a depression gas outlet controlled by an electric valve to control the flow of gas (22) which comes out to a secondary vacuum circuit outlet (254) through the vacuum pump pipe (23).

3. "**SOLID WASTE TREATMENT PLANT**", as per the preceding claims, characterised by the fact that the lower pipe (11) of the reactor has a primary vacuum outlet (15) for evacuating the catalytic cracking gas, which comes out to two serially-connected heat interchangers, a primary one (16) and a secondary one (17) which cool and condense the gases or vapours, allowing only the non-condensable fraction of the gas to escape which is neutralised by a gas neutralising filter (18) connected to the primary vacuum pump (19) and finally filtered through a gas filter (20) which extracts the iron, lime and carbon oxide.
